# EUROPEAN PATENT APPLICATION

(11) **EP 2 472 372 A1**
(43) Date of publication of application: **04.07.2012**
(21) Application number: 10811240.0
(22) Date of filing: 20.08.2010
(51) Int. Cl.: G06F 3/048, G06K 9/00, H04M 1/725

(54) **INPUT METHOD OF CONTACT INFORMATION AND SYSTEM**

(30) Priority: 27.08.2009 CN 200910194681
(71) Applicant: Intsig Information Co., Ltd., Shanghai 200433 (CN)
(72) Inventor: ZHU, Lin, Shanghai 200433 (CN)
(74) Representative: Pons Ariño, Angel
(86) International application number: PCT/CN2010/076173
(87) International publication number: WO 2011/023080

(57) **Abstract**

A method and a system for inputting contact information are provided. The method includes: acquiring a content attribute of a current edit box; starting up a camera device, and entering a shoot preview interface of the camera device; placing a text content of contact information to be input in the shoot preview interface of the camera device, and shooting the text content of the contact information; analyzing and recognizing the text content located near the positioning identifier in the preview interface in an image through an optical character recognition technology, and extracting a contact information character string conforming to the content attribute of the current edit box; and inputting a recognition result character string into the current edit box. Through the method and system, a user does not need to input the text content word by word through a keyboard input method or a touch screen, thereby saving the input time for the user. Moreover, since the system knows what type of character string is required in the current edit box during recognition, high accuracy of the recognition result character string can be ensured.

## Description

### Background of the Present Invention

### Field of Invention

The present invention belongs to the field of character input and image processing technologies, and relates to a character input method, and specifically to a method for inputting contact information based on an optical character recognition technology; meanwhile, the present invention also relates to a system for inputting contact information.

### Description of Related Arts

In recent years, with the increasing popularity of electronic apparatuses such as mobile phones, Personal Digital Assistants (PDAs), handheld gaming machines and navigators, character input methods are the most basic and common means among various means of man-machine interaction with the electronic apparatuses.

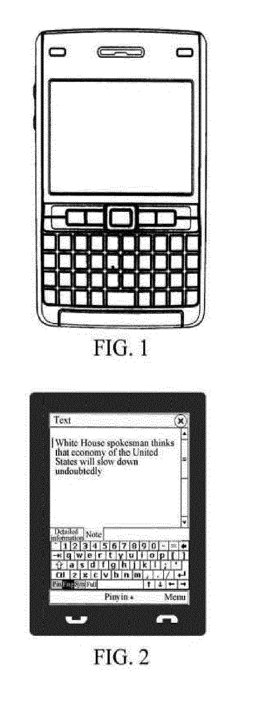

Currently, common character input methods are mainly classified into two types. One type is keyboard input methods, where a user inputs a character to be input through one or more keystrokes on a keyboard of a smart apparatus. For example, the keyboard character input methods include those adopted in S40 and S60 series mobile phones produced by Nokia Company and Q series mobile phones of Moto. Fig. 1 is an example of a keyboard input method of a mobile phone. The advantages of this type of methods are that, the user can perform single-hand input operation by using a thumb, an explicit feedback can be given to the user for each keystroke, and input in various languages can be implemented by defining combinations of keyboard keys. The disadvantages of this type of methods are that, the input of one character requires multiple keystrokes by the user, the user needs to learn to know a key combination corresponding to a character before inputting the character, for example, inputting a Chinese character through Pinyin, and the user needs to switch the input mode when inputting characters of different types.

The other type is touch screen input methods. In this type of input methods, a virtual keyboard on a touch screen of a smart apparatus is clicked to implement text input, or a character to be input is directly written on the touch screen through a touch pen, and the input method identifies the handwriting of the user and converts the handwriting to the character to implement text input (Fig. 2 is an example of a virtual keyboard touch screen input method based on the Windows Mobile). The advantages and disadvantages of the virtual key text input methods are similar to those of the keyboard input methods. The advantage of the handwriting input method is that, the user can input a character by directly writing the character on the touch screen without learning a key combination of the character. The disadvantages of the handwriting input method are that, the input speed is slow; two-hand operation is generally required, with one hand holding the apparatus and the other hand holding the touch pen to write the character; a recognition error easily occurs when the writing is illegible, which further reduces the input speed; the user also needs to switch the input mode when inputting characters of different types.

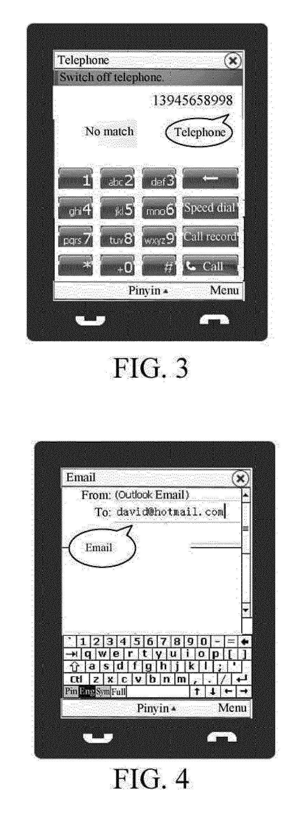

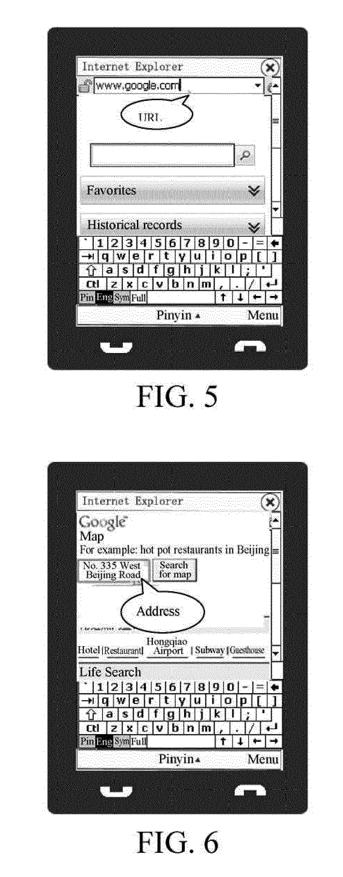

As functions of smart apparatuses become increasingly diversified, on the basis of original functions of making a call and sending a short message/email, more network functions, such as access to search engines, network maps and network blogs, are added to the smart apparatuses. In daily life, people often encounter printed matters carrying specific contact information, for example, a telephone number, an email and a mobile phone number on a name card, or a telephone number, an email, a Uniform Resource Locator (URL), and an address in an advertisement in a book, newspaper, periodical or magazine. When being interested in the content delivered by the printed matters, people may access the contact information through an application program in the smart apparatus, such as making a call, sending an email, or finding a map location. At this time, the contact information needs to be input into an edit box (for example, a telephone dial, shown in Fig. 3; an email recipient, shown in Fig. 4; a browser address column, shown in Fig. 5; or a map search address column, shown in Fig. 6) of the application program. For long information such as a URL and address information, characters of different types are often mixed (for example, Chinese characters and figures, or English characters and figures), and the input mode needs to be switched frequently in the input process. Moreover, in the input process, attention needs to be switched frequently between the input method of the smart apparatus and the printed text content. As a result, the process is troublesome and time-consuming.

### Summary of the Present Invention

The technical problem to be solved by the present invention is providing a method for inputting contact information, where a built-in camera of a smart apparatus can be used to shoot contact information to be input, thereby efficiently completing character input.

Moreover, the present invention further provides a system for inputting contact information, where a built-in camera of a smart apparatus can be used to shoot contact information to be input, thereby efficiently completing character input.

In order to solve the above technical problems, the present invention adopts the following technical solutions.

A method for inputting contact information in a smart apparatus is provided. In a memory of a smart apparatus with a built-in camera and an optical character recognition function, a program for controlling and instructing a central processing unit (CPU) to execute the following operations is installed. In the smart apparatus, when a current input method is activated to prepare for inputting a text in an edit box of a specific type of an application program, the built-in camera of the smart apparatus is started up, a display screen of the smart apparatus is used for shoot preview, a text content of contact information of a printed matter to be input is placed in a specific location (for example, the middle) of a shoot preview window, and then a shoot operation is performed to obtain an image comprising the text content to be input. Through an optical character recognition technology, the text content of the contact information at the specific location (for example, a middle location) of the image is analyzed and recognized and converted into a character string (such as a telephone number, a mobile phone number, an email address, a website, or an address) conforming to a content property of the edit box, and the character string is input into the edit box of the application program currently running on the smart apparatus.

A method for inputting contact information is provided, which comprises:
A: acquiring a content attribute of a current edit box;
B: starting up a camera device, entering a shoot preview interface of the camera device, placing a text content of contact information to be input near a positioning identifier of the shoot preview interface of the camera device, and shooting the text content of the contact information;
C: analyzing and recognizing the text content located near the positioning identifier in the preview interface in an image through an optical character recognition technology, and extracting a contact information character string conforming to the content attribute of the current edit box, wherein
   if the content attribute of the current edit box is a telephone number, a character string, only comprising figures or further comprising a symbol possibly comprised in the telephone number, in the recognized contact information character strings is selected, wherein the symbol possibly comprised in the telephone number comprises: "+", "-", "(", ")", "*", "x", and "ext.";
   if the content attribute of the current edit box is an email, a character string, comprising "@", in the recognized contact information character strings is selected;
   if the content attribute of the current edit box is a Uniform Resource Locator (URL), a character string, comprising "www", "http", multiple ".", or multiple "/", in the recognized contact information character strings is selected; and
   if the content attribute of the current edit box is an address, a character string, comprising Chinese characters or English characters or further comprising figures, in the recognized contact information character strings is selected; and
D: inputting a recognition result character string into the current edit box.

A method for inputting contact information is provided, which comprises:
A: acquiring a content attribute of a current edit box;
B: starting up a camera device, entering a shoot preview interface of the camera device, placing a text content of contact information to be input in the shoot preview interface of the camera device, and shooting the text content of the contact information;
C: analyzing and recognizing the text content located near the positioning identifier in the preview interface in an image through an optical character recognition technology, and extracting a contact information character string conforming to the content attribute of the current edit box;
D: inputting a recognition result character string into the current edit box.

As a preferred solution of the present invention, in Step C, the extracting the contact information character string conforming to the content attribute of the current edit box comprises:
if the content attribute of the current edit box is a telephone number, selecting a character string, only comprising figures or further comprising a symbol possibly comprised in the telephone number, in the recognized contact information character strings, wherein the symbol possibly comprised in the telephone number comprises: "+", "-", "(", ")", "*", "x", and "ext.";
if the content attribute of the current edit box is an email, selecting a character string, comprising "@", in the recognized contact information character strings;
if the content attribute of the current edit box is a Uniform Resource Locator (URL), selecting a character string, comprising "www", "http", multiple ".", or multiple "/", in the recognized contact information character strings; and
if the content attribute of the current edit box is an address, selecting a character string, comprising Chinese characters or English characters or further comprising figures, in the recognized contact information character strings.

As a preferred solution of the present invention, in Step C, if no contact information character string conforming to the content attribute of the current edit box is capable of being extracted from the text content located near the positioning identifier in the preview interface in the image, or the text located near the positioning identifier in the preview interface in the image is incapable of being recognized, a null character string is returned, and in this case, no character is input into the current edit box in Step D.

As a preferred solution of the present invention, in Step B, the positioning identifier is set in the shoot preview interface of the camera device and is used for specifying contact information to be shot.

As a preferred solution of the present invention, the positioning identifier is a positioning box, a line, or a symbol marking starting and ending locations.

As a preferred solution of the present invention, Step B further comprises a step of adjusting a shape of the positioning identifier through a positioning identifier adjustment module; and a user adjusts a location or/and the shape of the positioning identifier through the positioning identifier adjustment module according to a range of a text to be input.

As a preferred solution of the present invention, a display unit of the shoot preview interface is a touch display unit; the user inputs the location or/and the shape of the positioning identifier by initiating a touch action on the touch display unit according to the range of the text to be input; and the positioning identifier adjustment module acquires the touch action and sets the location or/and the shape of the positioning identifier according to the touch action.

A method for inputting contact information is provided, which comprises:
Step 410: acquiring a content attribute of a current edit box to prepare for inputting a character for a current application program;
Step 420: starting up a built-in camera of a smart apparatus and entering a shoot preview interface of the camera;
Step 430: placing a text content of contact information to be input near a positioning identifier of the shoot preview interface and shooting an image;
Step 440: analyzing the image, analyzing and recognizing the text content located near the positioning identifier in the preview interface in the image through an optical character recognition technology, and extracting a contact information character string conforming to the content attribute of the current edit box;
Step 450: inputting a recognition result character string into the current edit box; and
Step 460: ending the current camera input operation.

As a preferred solution of the present invention, in Step 420, the built-in camera of the smart apparatus is started up in an input method in one of the following manners:
Manner 1: in an input method popup menu, selecting a camera recognition input method to start up the built-in camera of the smart apparatus, that is, starting up the built-in camera of the smart apparatus immediately when starting up an optical character recognition input method, so as to enter the shooting preview interface of the camera;
Manner 2: pressing a specific key to start up the built-in camera of the smart apparatus and enter the shoot preview interface of the camera;
Manner 3: in an input method other than the camera input method, clicking a specific icon to start up the built-in camera of the smart apparatus and enter the shoot preview interface of the camera; and
Manner 4: placing a camera icon beside the edit box of the application program, and clicking the icon to start up the built-in camera.

As a preferred solution of the present invention, in Step 420, the shoot preview interface of the camera is displayed in one of the following manners: Manner 1: filling a display screen of the smart apparatus with a shoot preview image; and Manner 2: displaying the shoot preview image in only a certain local region of the screen of the smart apparatus.

As a preferred solution of the present invention, in Step 430, a shoot locator of the contact information is displayed in the shoot preview interface of the camera in one of the following manners: Manner 1: displaying a text prompt to instruct a user to place a text of the contact information in a specific location of the preview interface; and Manner 2: displaying a graph to instruct the user to place the text of the contact information in a specific location of the preview interface.

As a preferred solution of the present invention, prompt information is displayed in the shoot preview interface of the camera to inform a user of an attribute of a text content to be input in the edit box of the current application program.

A system for inputting contact information, disposed in an electronic apparatus and used for inputting set contact information, wherein the electronic apparatus comprises:
a camera device, for acquiring image information of contact information; and
a display unit, for displaying information;
the system for inputting contact information comprising:
   an optical character recognition module, for recognizing the contact information in the image information acquired by the camera device as a character text;
   a content attribute recognition module, for recognizing a content attribute of each contact information character string; and
   a content attribute selection module, for selecting a character string conforming to a content attribute of a current edit box as an input content according to the content attribute of the current edit box.

As a preferred solution of the present invention, the content attribute recognition module recognizes the content attribute of each contact information character string in the following manner:
if the content attribute of the current edit box is a telephone number, selecting a character string, only comprising figures or further comprising a symbol possibly comprised in the telephone number, in the recognized contact information character strings, wherein the symbol possibly comprised in the telephone number comprises: "+", "-", "(", ")", "*", "x", and "ext.";
if the content attribute of the current edit box is an email, selecting a character string, comprising "@", in the recognized contact information character strings;
if the content attribute of the current edit box is a Uniform Resource Locator (URL), selecting a character string, comprising "www", "http", multiple ".", or multiple "/", in the recognized contact information character strings; and
if the content attribute of the current edit box is an address, selecting a character string, comprising Chinese characters or English characters or further comprising figures, in the recognized contact information character strings.

Beneficial effects of the present invention are that, through the input method consistent with the present invention, the user uses the built-in camera of the smart apparatus to shoot the text content of the contact information to be input, recognize the text content, and input the text content into the application program. The user does not need to input the text content word by word through a keyboard input method or a touch screen. The larger the number of words of the contact information to be input is, the more the input time saved for the user is. Moreover, since the system already knows what type of character string is required in the current edit box during recognition, high accuracy of the recognition result character string can be ensured.

### Brief Description of the Drawings

Fig. 1 is a schematic view of keyboard input of a smart apparatus.
Fig. 2 is a schematic view of a virtual touch keyboard input method.
Fig. 3 is a schematic view of an edit box of a telephone dial.
Fig. 4 is a schematic view of an edit box of an email address.
Fig. 5 is a schematic view of an edit box of a URL.
Fig. 6 is a schematic view of an edit box of an address.
Fig. 7 is a flowchart of an input method in combination with a built-in camera of a smart apparatus and an optical character recognition technology and using a content property of an edit box of an application program, consistent with the present invention.
Fig. 8 is a schematic view of a method for inputting contact information of a printed matter in combination with a built-in camera of a smart apparatus and an optical character recognition technology and by using a content property of an edit box of an application program.
Fig. 9 is a schematic view of a process for enabling a camera input method by selecting a camera input method in an input method menu.
Fig. 10 is a schematic view of a process for enabling a camera input method by clicking a camera icon in another input method.
Fig. 11 is a schematic view of a camera icon placed beside an edit box.
Fig. 12 is a schematic view of displaying a text prompt or graph to instruct a user to place contact information of a printed matter in a specific location of the preview interface of a camera.
Fig. 13 is a schematic view of displaying a graph or text prompt to inform a user of a type of current printed matter information.

### Detailed Description of the Preferred Embodiments

Preferred embodiments of the present invention are described in detail with reference to the accompanying drawings.

### Embodiment 1

The present invention provides a method for inputting contact information in a smart apparatus. The method needs to be implemented in a smart apparatus with an optical character recognition function and a built-in camera. When a current input method is activated to prepare for inputting a text in an edit box of a specific type of an application program, the built-in camera of the smart apparatus is started up, a display screen of the smart apparatus is used for shoot preview, a text content of contact information of a printed matter to be input is placed in a specific location of a shoot preview window, and then a shoot operation is performed to obtain an image including the text content to be input. Through an optical character recognition technology, the text content of the contact information is analyzed and recognized and converted into a character string (such as a telephone number, a mobile phone number, an email address, a website, or an address) conforming to a content property of the edit box, and the character string is input into the edit box of the application program currently running on the smart apparatus.

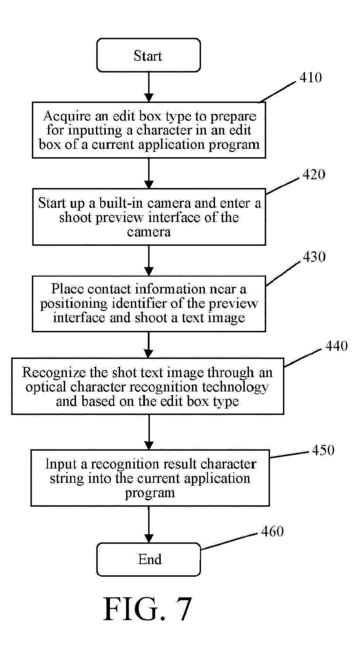

Fig. 7 discloses a process of a method for inputting contact information of a printed matter in combination with a built-in camera of a smart apparatus and an optical character recognition technology and by using a content property of an edit box of an application program. Referring to Fig. 7, specific steps are as follows.

### Step 410:

Acquire a content attribute of a current edit box to prepare for inputting a character for a current application program. The content attribute includes a telephone number, an email address, a website URL, a contact address, and the like.

### Step 420:

Start up a built-in camera of a smart apparatus and enter a shoot preview interface of the camera.

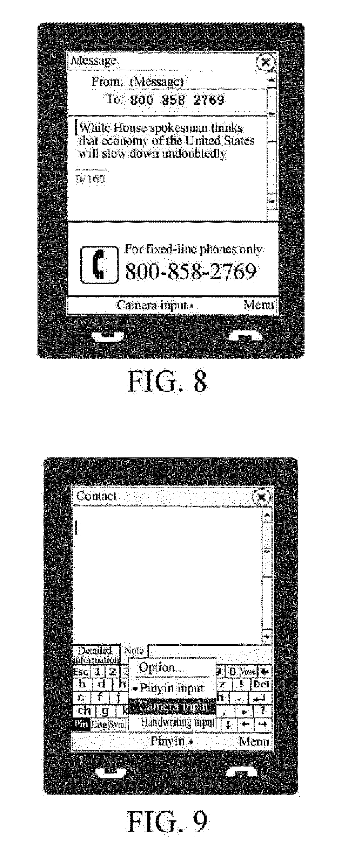

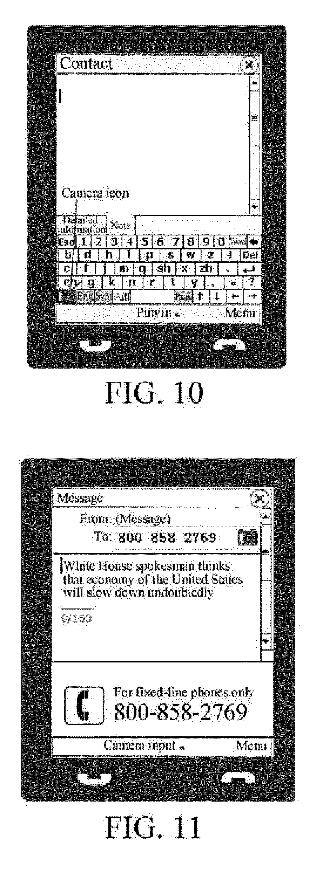

The built-in camera of the smart apparatus is started up in an input method in the following manners:
Manner 1: In an input method popup menu, a camera recognition input method is selected to start up the built-in camera of the smart apparatus, that is, the built-in camera of the smart apparatus is started up immediately when an optical character recognition input method is started up, so as to enter the shoot preview interface of the camera (Fig. 9 is an example of selecting "camera input method" in the input method menu to enable the camera input method).
Manner 2: A specific key, for example, a camera key of the smart apparatus, is pressed to start up the built-in camera of the smart apparatus and enter the shoot preview interface of the camera.
Manner 3: In another input method, for example, a handwriting input method or a Pinyin input method, a specific icon is clicked to start up the built-in camera of the smart apparatus and enter the shoot preview interface of the camera (Fig. 10 is an example of clicking a camera icon in another input method to enable the camera input method).
Manner 4: A camera icon is placed beside the edit box of the application program, and the built-in camera can be started up by clicking the icon.

The shoot preview interface of the camera is displayed in the following manners:
Manner 1: A display screen of the smart apparatus is filled with a shoot preview image.
Manner 2: The shoot preview image is only displayed in a certain local region, for example, an input method window region, of the screen of the smart apparatus (Fig. 8 displays an example of displaying the shoot preview image in an input method window).

### Step 430:

Place a text content of contact information to be input near a positioning identifier of the shoot preview interface and shoot the image.

A shoot positioning identifier (for example, locator) of the contact information is displayed in the shoot preview interface of the camera in the following manners:
Manner 1: A text prompt is displayed to instruct a user to place a text of the contact information in a specific location of the preview interface.
Manner 2: A graph is displayed to instruct the user to place the text of the contact information in a specific location of the preview interface.

### Step 440:

Analyze the image, analyze and recognize the text content located near the positioning identifier in the preview interface in the image through an optical character recognition technology, and extract a contact information character string conforming to the content attribute of the current edit box. A text or graph may be displayed in the shoot preview interface of the camera to inform the user of what text content is required in the edit box of the current application program.

If no contact information character string conforming to the content attribute of the current edit box is capable of being extracted from the text content located near the positioning identifier in the preview interface in the image, or the text located near the positioning identifier in the preview interface in the image is incapable of being recognized, a null character string is returned, and in this case, no character is input into the current edit box in Step 450.

In this step, if the text recognition fails or no contact information character string conforming to the content attribute of the current edit box can be extracted, the user needs to perform the shoot process again or manually input the required character string.

### Step 450:

Input a recognition result character string into the current edit box.

### Step 460:

End the current camera input operation.

In summary, through the input method consistent with the present invention, the user uses the built-in camera of the smart apparatus to shoot the text content of the contact information to be input, recognize the text content, and input the text content into the application program. The user does not need to input the text content word by word through a keyboard input method or a touch screen. The larger the number of words of the contact information to be input is, the more the input time saved for the user is. Moreover, since it is known what type of character string is required in the current edit box during recognition, high accuracy of the recognition result character string can be ensured.

### Embodiment 2

This embodiment discloses a method for inputting contact information. The method includes the following steps.
Step A: Acquire a content attribute of a current edit box, where the content attribute includes a telephone number, an email address, a website URL, a contact address, and the like.
Step B: Start up a camera device, enter a shoot preview interface of the camera device, place a text content of contact information to be input near a positioning identifier of the shoot preview interface of the camera device, and shoot the text content of the contact information.

The positioning identifier set in the shoot preview interface is used for specifying contact information to be shot. The positioning identifier may be a positioning box, a line (single, double, or multiple lines), or a symbol marking starting and ending locations.

Preferably, this method may further include a step of adjusting a shape of the positioning identifier through a positioning identifier adjustment module; and a user adjusts a location or/and the shape of the positioning identifier through the positioning identifier adjustment module according to a range of a text to be input.

Preferably, when a display unit of the electronic apparatus is a touch display unit, the user may input the location or/and the shape of the positioning identifier by initiating a touch action on the touch display unit according to the range of the text to be input; and the positioning identifier adjustment module acquires the touch action and sets the location or/and the shape of the positioning identifier according to the touch action.

The order of Step A and Step B can be reversed.
Step C: Analyze and recognize the text content located near the positioning identifier in the preview interface in an image through an optical character recognition technology, and extract a contact information character string conforming to the content attribute of the current edit box.

If the content attribute of the current edit box is a telephone number, a character string, only including figures or further including a symbol possibly included in the telephone number, in the recognized contact information character strings is selected, where the symbol possibly included in the telephone number includes: "+", "-", "(", ")", "*", "x", and "ext.".

If the content attribute of the current edit box is an email, a character string, including "@", in the recognized contact information character strings is selected.

If the content attribute of the current edit box is a URL, a character string, including "www", "http", multiple ".", or multiple "/", in the recognized contact information character strings is selected.

If the content attribute of the current edit box is an address, a character string, including Chinese characters or English characters or further including figures, in the recognized contact information character strings is selected.

If no contact information character string conforming to the content attribute of the current edit box is capable of being extracted from the text content located near the positioning identifier in the preview interface in the image, or the text located near the positioning identifier in the preview interface in the image is incapable of being recognized, a null character string is returned, and in this case, no character is input into the current edit box in Step D.

Step D: Input a recognition result character string into the current edit box.

The process of the method for inputting contact information consistent with the present invention is described above. The present invention also discloses a system for inputting contact information corresponding to the method. The system is disposed in an electronic apparatus and used for inputting contact information.

The electronic apparatus includes a camera device, a display unit, and a system for inputting contact information. The camera device is used for acquiring image information of contact information. The display unit is used for displaying information.

The system for inputting contact information includes an optical character recognition module, a content attribute recognition module, and a content attribute selection module. The optical character recognition module is used for recognizing the contact information in the image information acquired by the camera device as a character text. The content attribute recognition module is used for recognizing a content attribute of each contact information character string. For the process of the content attribute recognition module recognizing the content attribute of each contact information character string, reference may be made to Step C of the method described above. The content attribute selection module is used for selecting a character string conforming to a content attribute of a current edit box as an input content according to the content attribute of the current edit box.

Definitely, in order to adjust the location and shape of the positioning identifier, the system further includes a positioning identifier adjustment module.

### Embodiment 3

The difference between this embodiment and Embodiments 1 and 2 is that, in this embodiment, the positioning identifier does not need to be set in Step C and a photo is directly shot, and then the content attribute recognition module selects the contact information character string conforming to the content attribute of the current edit box.

### Embodiment 4

This embodiment needs to be implemented in a Nokia mobile phone N73 based on the Symbian S60 operating system. In the mobile phone, the working frequency of the CPU is 200 MHz, the memory capacity is 48 M, the camera resolution is 3.2 M pixels, and the display is a 2-inch display screen of 320*240 pixels. An input method switch key is pressed to switch to a camera input method, and then all steps are performed continuously.

### Embodiment 5

This embodiment needs to be implemented in a touch mobile phone dopod 830 based on the Windows Mobile 5.0 operating system. In the mobile phone, the working frequency of the CPU is 200 MHz, the memory capacity is 48 M, the camera resolution is 2 M pixels, and the display is a 2.8-inch display screen of 320*240 pixels. A camera icon is clicked in a soft keyboard input method shown in Fig. 10 to start up a camera input method, and then all steps are performed continuously. In Fig. 8, a shot text image is displayed in a touch camera input method window, and recognized as a character string through an optical character recognition technology, and the character string is input into the application program.

### Embodiment 6

This embodiment needs to be implemented in a touch mobile phone dopod 830 based on the Windows Mobile 5.0 operating system. In the mobile phone, the working frequency of the CPU is 200 MHz, the memory capacity is 48 M, the camera resolution is 2 M pixels, and the display is a 2.8-inch display screen of 320*240 pixels. A camera icon beside an edit box is clicked, as shown in Fig. 11, to start up a camera input method, and then all steps are performed continuously.

### Embodiment 7

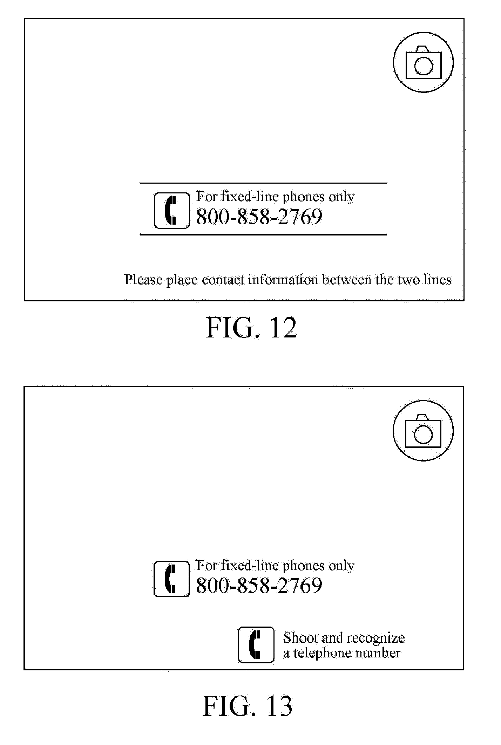

This embodiment needs to be implemented in a touch mobile phone dopod 830 based on the Windows Mobile 5.0 operating system. In the mobile phone, the working frequency of the CPU is 200 MHz, the memory capacity is 48 M, the camera resolution is 2 M pixels, and the display is a 2.8-inch display screen of 320*240 pixels. A camera input method is started up. As shown in Fig. 12, a graph or text is displayed in a shoot preview interface to instruct a user to place contact information of a printed matter in a specific location of the shoot preview interface. After a picture is shot, all steps are performed continuously.

### Embodiment 8

This embodiment needs to be implemented in a touch mobile phone dopod 830 based on the Windows Mobile 5.0 operating system. In the mobile phone, the working frequency of the CPU is 200 MHz, the memory capacity is 48 M, the camera resolution is 2 M pixels, and the display is a 2.8-inch display screen of 320*240 pixels. A camera input method is started up. As shown in Fig. 13, a graph or text is displayed in a shoot preview interface to inform a user of what type of information contact information of a printed matter currently needing to be shot is. After a picture is shot, all steps are performed continuously.

### Embodiment 9

This embodiment needs to be implemented in a touch mobile phone dopod 830 based on the Windows Mobile 5.0 operating system. In the mobile phone, the working frequency of the CPU is 200 MHz, the memory capacity is 48 M, the camera resolution is 2 M pixels, and the display is a 2.8-inch display screen of 320*240 pixels. A camera input method is switched to through an input method switch menu shown in Fig. 9, and then all steps are performed continuously. In Fig. 8, a shot text image is displayed in a touch camera input method window, and recognized as a character string through an optical character recognition technology, and the character string is input into the application program.

Herein, the description and application of the present invention are illustrative, and the scope of the present invention is not intended to be limited to the above embodiments. Variations and changes to the embodiments disclosed herein are possible. Replacement made to the embodiments and equivalent parts are well-known to persons skilled in the art. It should be known to persons skilled in the art that, the present invention can be implemented in other forms, structures, arrangements, ratios and through other components, materials, and parts without departing from the script or essential features of the present invention. Other variations and changes may be made to the embodiments disclosed herein without departing from the scope and script of the present invention.

## Claims

1. A method for inputting contact information, comprising:
A: acquiring a content attribute of a current edit box;
B: starting up a camera device, entering a shoot preview interface of the camera device, placing a text content of contact information to be input near a positioning identifier of the shoot preview interface of the camera device, and shooting the text content of the contact information;
C: analyzing and recognizing the text content located near the positioning identifier in the preview interface in an image through an optical character recognition technology, and extracting a contact information character string conforming to the content attribute of the current edit box, wherein
if the content attribute of the current edit box is a telephone number, a character string, only comprising figures or further comprising a symbol possibly comprised in the telephone number, in the recognized contact information character strings is selected, wherein the symbol possibly comprised in the telephone number comprises: "+", "-", "(", ")", "*", "x", and "ext.";
if the content attribute of the current edit box is an email, a character string, comprising "@", in the recognized contact information character strings is selected;
if the content attribute of the current edit box is a Uniform Resource Locator (URL), a character string, comprising "www", "http", multiple ".", or multiple "/", in the recognized contact information character strings is selected; and
if the content attribute of the current edit box is an address, a character string, comprising Chinese characters or English characters or further comprising figures, in the recognized contact information character strings is selected; and
D: inputting a recognition result character string into the current edit box.

2. A method for inputting contact information, comprising:
A: acquiring a content attribute of a current edit box;
B: starting up a camera device, entering a shoot preview interface of the camera device, placing a text content of contact information to be input in the shoot preview interface of the camera device, and shooting the text content of the contact information;
C: analyzing and recognizing the text content located near the positioning identifier in the preview interface in an image through an optical character recognition technology, and extracting a contact information character string conforming to the content attribute of the current edit box; and
D: inputting a recognition result character string into the current edit box.

3. The method for inputting contact information as in claim 2, wherein
in Step C, the extracting the contact information character string conforming to the content attribute of the current edit box comprises:
if the content attribute of the current edit box is a telephone number, selecting a character string, only comprising figures or further comprising a symbol possibly comprised in the telephone number, in the recognized contact information character strings, wherein the symbol possibly comprised in the telephone number comprises: "+", "-", "(", ")", "*", "x", and "ext.";
if the content attribute of the current edit box is an email, selecting a character string, comprising "@", in the recognized contact information character strings;
if the content attribute of the current edit box is a Uniform Resource Locator (URL), selecting a character string, comprising "www", "http", multiple ".", or multiple "/", in the recognized contact information character strings; and
if the content attribute of the current edit box is an address, selecting a character string, comprising Chinese characters or English characters or further comprising figures, in the recognized contact information character strings.

4. The method for inputting contact information as in claim 2, wherein
in Step C, if no contact information character string conforming to the content attribute of the current edit box is capable of being extracted from the text content located near the positioning identifier in the preview interface in the image, or the text located near the positioning identifier in the preview interface in the image is incapable of being recognized, a null character string is returned, and in this case, no character is input into the current edit box in Step D.

5. The method for inputting contact information as in claim 2, wherein
in Step B, the positioning identifier is set in the shoot preview interface of the camera device and is used for specifying contact information to be shot.

6. The method for inputting contact information as in claim 5, wherein
the positioning identifier is a positioning box, a line, or a symbol marking starting and ending locations.

7. The method for inputting contact information as in claim 5, wherein
Step B further comprises a step of adjusting a shape of the positioning identifier through a positioning identifier adjustment module; and
a user adjusts a location or/and the shape of the positioning identifier through the positioning identifier adjustment module according to a range of a text to be input.

8. The method for inputting contact information as in claim 7, wherein
a display unit of the shoot preview interface is a touch display unit;
the user inputs the location or/and the shape of the positioning identifier by initiating a touch action on the touch display unit according to the range of the text to be input; and
the positioning identifier adjustment module acquires the touch action and sets the location or/and the shape of the positioning identifier according to the touch action.

9. A method for inputting contact information, comprising:
Step 410: acquiring a content attribute of a current edit box to prepare for inputting a character for a current application program;
Step 420: starting up a built-in camera of a smart apparatus and entering a shoot preview interface of the camera;
Step 430: placing a text content of contact information to be input near a positioning identifier of the shoot preview interface and shooting an image;
Step 440: analyzing the image, analyzing and recognizing the text content located near the positioning identifier in the preview interface in the image through an optical character recognition technology, and extracting a contact information character string conforming to the content attribute of the current edit box;
Step 450: inputting a recognition result character string into the current edit box; and
Step 460: ending the current camera input operation.

10. The method for inputting contact information as in claim 9, wherein
in Step 420, the built-in camera of the smart apparatus is started up in an input method in one of the following manners:
Manner 1: in an input method popup menu, selecting a camera recognition input method to start up the built-in camera of the smart apparatus, that is, starting up the built-in camera of the smart apparatus immediately when starting up an optical character recognition input method, so as to enter the shooting preview interface of the camera;
Manner 2: pressing a specific key to start up the built-in camera of the smart apparatus and enter the shoot preview interface of the camera;
Manner 3: in an input method other than the camera input method, clicking a specific icon to start up the built-in camera of the smart apparatus and enter the shoot preview interface of the camera; and
Manner 4: placing a camera icon beside the edit box of the application program, and clicking the icon to start up the built-in camera.

11. The method for inputting contact information as in claim 9, wherein
in Step 420, the shoot preview interface of the camera is displayed in one of the following manners:
Manner 1: filling a display screen of the smart apparatus with a shoot preview image; and
Manner 2: displaying the shoot preview image in only a certain local region of the screen of the smart apparatus.

12. The method for inputting contact information as in claim 9, wherein
in Step 430, a locator of the contact information is displayed in the shoot preview interface of the camera in one of the following manners:
Manner 1: displaying a text prompt to instruct a user to place a text of the contact information in a specific location of the preview interface; and
Manner 2: displaying a graph to instruct the user to place the text of the contact information in a specific location of the preview interface.

13. The method for inputting contact information as in claim 9, wherein
prompt information is displayed in the shoot preview interface of the camera to inform a user of an attribute of a text content to be input in the edit box of the current application program.

14. A system for inputting contact information, disposed in an electronic apparatus and used for inputting set contact information, wherein
the electronic apparatus comprises:
a camera device, for acquiring image information of contact information; and
a display unit, for displaying information;
the system for inputting contact information comprising:
an optical character recognition module, for recognizing the contact information in the image information acquired by the camera device as a character text;
a content attribute recognition module, for recognizing a content attribute of each contact information character string; and
a content attribute selection module, for selecting a character string conforming to a content attribute of a current edit box as an input content according to the content attribute of the current edit box.

15. The system for inputting contact information as in claim 14, wherein
the content attribute recognition module recognizes the content attribute of each contact information character string in the following manner:
if the content attribute of the current edit box is a telephone number, selecting a character string, only comprising figures or further comprising a symbol possibly comprised in the telephone number, in the recognized contact information character strings, wherein the symbol possibly comprised in the telephone number comprises: "+", "-", "(", ")", "*", "x", and "ext.";
if the content attribute of the current edit box is an email, selecting a character string, comprising "@", in the recognized contact information character strings;
if the content attribute of the current edit box is a Uniform Resource Locator (URL), selecting a character string, comprising "www", "http", multiple ".", or multiple "/", in the recognized contact information character strings; and
if the content attribute of the current edit box is an address, selecting a character string, comprising Chinese characters or English characters or further comprising figures, in the recognized contact information character strings.
